# EUROPÄISCHE PATENTSCHRIFT

(11) **EP 3 750 744 B1**
(45) Veröffentlichungstag und Bekanntmachung des Hinweises auf die Patenterteilung: **10.05.2023**
(21) Anmeldenummer: 20165978.6
(22) Anmeldetag: 26.03.2020
(51) Int. Cl.: B60N 2/60

(54) **SCHONBEZUG FÜR EIN SITZTEIL EINES KRAFTFAHRZEUGSITZES**
PROTECTIVE LINING FOR A SEAT PART OF A MOTOR VEHICLE SEAT
HOUSSE DE SIÈGE POUR UNE PARTIE D'UN SIÈGE DE VÉHICULE AUTOMOBILE

(30) Priorität: 22.05.2019 AT 1922019
(43) Veröffentlichungstag der Anmeldung: 16.12.2020
(73) Patentinhaber: Walser, Hans-Karl, 6845 Hohenems (AT)
(72) Erfinder: Walser, Hans-Karl, 6845 Hohenems (AT)
(74) Vertreter: Torggler & Hofmann Patentanwälte - Rankweil

(56) Entgegenhaltungen:
- US-A- 4 396 227
- US-B2- 9 327 629
- US-B2- 9 403 462

## Beschreibung

Die Erfindung bezieht sich auf einen Schonbezug für ein Sitzteil eines Kraftfahrzeugsitzes mit einem Bezugsstoff zum Überdecken einer Sitzfläche des Sitzteils und Spannriemen zum Befestigen des Schonbezuges am Kraftfahrzeugsitz, wobei der Schonbezug zumindest eine Öffnung für an einer der seitlichen Schmalseiten des Sitzteils angeordnete Funktionselemente des Sitzteils aufweist, welche zwischen einem Rand des Bezugsstoffs und einem, vorzugsweise gummielastisch dehnbar ausgebildeten, Spannriemen liegt, welcher im Abstand unterhalb des Randes des Bezugsstoffs zur Rückseite des Kraftfahrzeugsitzes verläuft, und wobei zwischen dem Rand des Bezugsstoffs und dem Spannriemen, welcher im Abstand unterhalb des Randes des Bezugsstoffs verläuft, mindestens ein Verbindungsband verläuft, welches eine Schlaufe ausbildet, durch welche der Spannriemen verläuft, wobei die Schlaufe gegenüber dem Spannriemen in dessen Längsrichtung verschiebbar ist.

Bei Schonbezügen für Sitzteile von Kraftfahrzeugen besteht ein Problem darin, dass seitlich an den Sitzteilen Bedienelemente angeordnet sind, welche auch nach Anbringung des Schonbezuges möglichst zugänglich bleiben sollen. Da diese Bedienelemente je nach Fahrzeug sehr unterschiedlich angeordnet und ausgebildet sind, werden Schonbezüge häufig genau an die jeweilige Fahrzeugtype angepasst, was den Herstellungs- und Lagerungsaufwand wesentlich erhöht. Andere, universell einsetzbare Schonbezüge erstrecken sich auch über die Schmalseiten des Sitzteils, wobei in Kauf genommen wird, dass Funktionselemente an der Schmalseite des Sitzteils überdeckt werden.

Ein Schonbezug der eingangs genannten Art geht aus der US 4,396,227 A hervor. Der darin gezeigte Schonbezug weist einen Sitzteil-Abschnitt auf, wobei zwischen einem Rand des Bezugsstoffs und einem im Abstand unterhalb des Randes des Bezugsstoffes zur Rückseite des Kraftfahrzeugsitzes verlaufenden Spannriemen Öffnungen ausgebildet sind. Der Spannriemen erstreckt sich durch Schlaufen, die in Eckbereichen zwischen der Vorderseite des Bezugsstoffs und seitlichen Abschnitten des Bezugsstoffs angeordnet sind, sowie durch Laschen, die an seitlichen Abschnitten des Bezugsstoffs angeordnet sind.

Aufgabe der Erfindung ist es, einen Schonbezug der eingangs genannten Art bereitzustellen, der sich in vorteilhafter Weise zum Einsatz bei verschiedenartigen Sitzteilen mit unterschiedlich angeordneten Bedienelementen an der Schmalseite eignet. Erfindungsgemäß gelingt dies durch einen Schonbezug mit den Merkmalen des Anspruchs 1.

Der Schonbezug gemäß der Erfindung weist zumindest eine Öffnung für an einer der seitlichen Schmalseiten des Sitzteils angeordnete Funktionselemente, insbesondere Bedienelemente, des Sitzteils auf, wobei die Öffnung zwischen einem Rand des Bezugsstoffs und einem, vorzugsweise gummielastisch dehnbar ausgebildeten, Spannriemen liegt. Dieser Spannriemen verläuft bezogen auf den Gebrauchszustand des Schonbezuges im Abstand unterhalb des Randes des Bezugsstoffs zur Rückseite des Kraftfahrzeugsitzes und kann dort vorteilhafterweise mit einem weiteren, auf der gegenüberliegenden Seite des Bezugsstoffs vom Bezugsstoff ausgehenden, zur Rückseite des Kraftfahrzeugsitzes verlaufenden, vorzugsweise gummielastisch dehnbar ausgebildeten, Spannriemen verbunden werden.

Zwischen dem Rand des Bezugsstoffs und dem Spannriemen, welcher im Abstand unterhalb des Randes des Bezugsstoffs verläuft, verläuft mindestens ein Verbindungsband, welches eine Schlaufe ausbildet, durch welche der Spannriemen verläuft, wobei die Schlaufe gegenüber dem Spannriemen in dessen Längsrichtung verschiebbar ist. Das mindestens eine Verbindungsband ist erfindungsgemäß gummielastisch dehnbar ausgebildet.

Günstigerweise weist der Bezugsstoff einen Sitzflächenabschnitt zur Auflage auf der Sitzfläche des Sitzteils, einen Vorderabschnitt zur Anlage an der vorderen Schmalseite des Sitzteils und Seitenabschnitte zur Anlage an den seitlichen Schmalseiten des Sitzteils auf, wobei der Spannriemen im Abstand unterhalb des unteren Randes eines der Seitenabschnitte des Bezugsstoffs zur Rückseite des Kraftfahrzeugsitzes verläuft. Dieser Seitenabschnitt ist also zumindest bereichsweise verkürzt ausgebildet, sodass der untere Rand des Seitenabschnitts oberhalb von an der Schmalseite des Sitzteils angeordneten Funktionselementen, insbesondere Bedienelementen, zum Liegen kommt, wobei der Spannriemen unterhalb dieser Funktionselemente verlaufen kann. Funktionselemente an der Schmalseite des Sitzteils können somit im Bereich der Öffnung liegen, die zwischen dem unteren Rand des Seitenabschnitts des Schonbezugs und dem Spannriemen liegt.

Durch die Erfindung kann ein für unterschiedliche Anordnungen von Funktionselementen an der Schmalseite des Sitzteils sich eignender Schonbezug bereitgestellt werden, der dennoch in stabiler Weise am Kraftfahrzeugsitz befestigbar ist.

Vorteilhafterweise verläuft das mindestens eine gummielastisch dehnbar ausgebildete Verbindungsband zwischen dem unteren Rand des Seitenabschnitts und dem im Abstand von diesem verlaufenden Spannriemen. Die Stabilität der Befestigung des Schonbezuges am Sitzteil wird dadurch weiter verbessert.

Der Punkt, an welchem der mindestens eine im Abstand unterhalb des Randes des Bezugsstoffs zur Rückseite des Kraftfahrzeugsitzes verlaufenden Spannriemens vom Bezugsstoff ausgeht, liegt vorteilhafterweise im Bereich der vorderen Hälfte des Seitenabschnitts oder im Bereich des Übergangs zwischen dem Vorderabschnitt und dem Seitenabschnitt des Bezugsstoffs. Der Ausgangspunkt des Spannriemens befindet sich hierbei am unteren Rand des Bezugsstoffs. Wenn man bezogen auf den Gebrauchszustand den Verlauf dieses unteren Randes des Bezugsstoffs zum hinteren Ende des Bezugsstoffs betrachtet, so verläuft der untere Rand des Bezugsstoffs anschließend an den Ausgangspunkt des Spannriemens nach oben, um die Öffnung zwischen dem unteren Rand des Bezugsstoffs und dem Spannriemen auszubilden.

Die beiden auf gegenüberliegenden Seiten des Bezugsstoffs ausgehenden, zur Rückseite des Kraftfahrzeugsitzes verlaufenden Spannriemen sind an der Rückseite des Kraftfahrzeugsitzes insbesondere mittels eines Klettverschlusses oder mittels einer Schnalle miteinander verbindbar.

Zur weitere Verbesserung der Befestigung des Schonbezuges am Sitzteil ist vorteilhafterweise vorgesehen, dass vom Rand des Bezugsstoffs, unterhalb von dem der Spannriemen verläuft, im Bereich des hinteren Endes der Sitzfläche des Sitzteils, also im Bereich des hinteren Endes des Sitzflächenabschnitts des Bezugsstoffs, ein Rückspannband ausgeht, welches schräg nach hinten und unten verläuft und mit dem Spannriemen verbunden ist.

Wenn in dieser Schrift von "vorne" und "hinten" die Rede ist, so ist dies auf die Fahrtrichtung des Kraftfahrzeugs bezogen.

Weitere Vorteile und Einzelheiten der Erfindung werden im Folgenden anhand der beiliegenden Zeichnung erläutert. In dieser zeigen:
- Fig. 1: eine Schrägsicht eines Teils eines Kraftfahrzeugsitzes mit einem angelegten Schonbezug gemäß einem ersten Ausführungsbeispiel der Erfindung;
- Fig. 2: den Kraftfahrzeugsitz mit dem angelegten Schonbezug von der Rückseite;
- Fig. 3: eine Darstellungen entsprechend Fig. 1 für ein zweites Ausführungsbeispiel der Erfindung;
- Fig. 4: eine alternative Verbindung der Spannriemen an der Rückseite des Kraftfahrzeugsitzes.

Der Kraftfahrzeugsitz, an welchen der Schonbezug anzulegen ist, umfasst ein Sitzteil 1 und ein Rückenlehnenteil 2. Der Schonbezug ist an das Sitzteil 1 anlegbar. An das Rückenlehnenteil 2 kann ein separater Schonbezug angelegt werden. Ein erfindungsgemäßer, an das Sitzteil 1 anlegbarer Schonbezug könnte auch einteilig mit einem an das Rückenlehnenteil 2 anlegbaren Schonbezug ausgebildet sein.

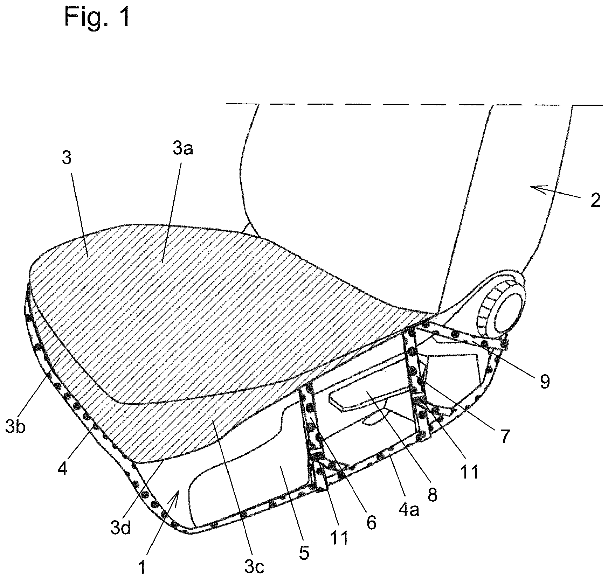

Der Schonbezug weist einen Bezugsstoff 3 auf, der einen Sitzflächenabschnitt 3a zur Auflage auf der Sitzfläche des Sitzteils 1, ein Vorderabschnitt 3b zur Anlage an der vorderen Schmalseite des Sitzteils 1 und Seitenabschnitte 3c zur Anlage an den beiden seitlichen Schmalseiten des Sitzteils 1 aufweist. In Fig. 1 ist nur der Seitenabschnitt 3c sichtbar, welcher an der fahrzeugrandseitigen Schmalseite des Sitzteils 1 anliegt.

Der untere Rand 3d des in Fig. 1 sichtbaren Seitenabschnitts 3c erstreckt sich nicht bis zum unteren Ende der Schmalseite des Sitzteils 1 sondern ist verkürzt ausgebildet.

Im Übergangsbereich zwischen dem Vorderabschnitt 3b und dem Seitenabschnitt 3c geht vom unteren Rand 3d des Bezugsstoffs 3 ein erster Spannriemen 4a aus. Der Spannriemen 4a verläuft entlang der Schmalseite des Sitzteils 1 nach hinten zur Rückseite des Kraftfahrzeugsitzes. Anschließend an seinen Ausgangspunkt vom unteren Rand 3d des Bezugsstoffs 3 vergrößert sich hierbei der Abstand zum unteren Rand 3d zunehmend. Im Ausführungsbeispiel verläuft der Spannriemen 4a somit über die gesamte Längserstreckung des Seitenabschnitts 3c des Bezugsstoffs 3 im Abstand vom unteren Rand 3d des Bezugsstoffs 3. Zwischen dem im Bereich des Seitenabschnitts 3c liegenden unteren Rand 3d des Bezugsstoffs 3 und dem Spannriemen 4a liegt somit eine Öffnung 5.

Zwischen dem im Bereich des Seitenabschnitts 3c liegenden unteren Rand 3d des Bezugsstoffs 3 und dem Spannriemen 4a verlaufen Verbindungsbänder 6 und 7. Diese überqueren somit die Öffnung 5 und verbinden den unteren Rand 3d mit dem Spannriemen 4a. Die Verbindungsbänder 6, 7 bilden jeweils eine Schlaufe aus, durch welche der Spannriemen 4a verläuft. Der Spannriemen 4a ist hierbei in seine Längsrichtung gegenüber dieser Schlaufe verschiebbar.

An der in Fig. 1 sichtbaren seitlichen Schmalseite des Sitzteils 1 sind Funktionselemente 8, insbesondere Bedienelemente zur Verstellung des Kraftfahrzeugsitzes, angeordnet. Diese liegen im Bereich der Öffnung 5, also zwischen dem unteren Rand 3d und dem Spannriemen 4a, und sind somit für den Benutzer zugänglich.

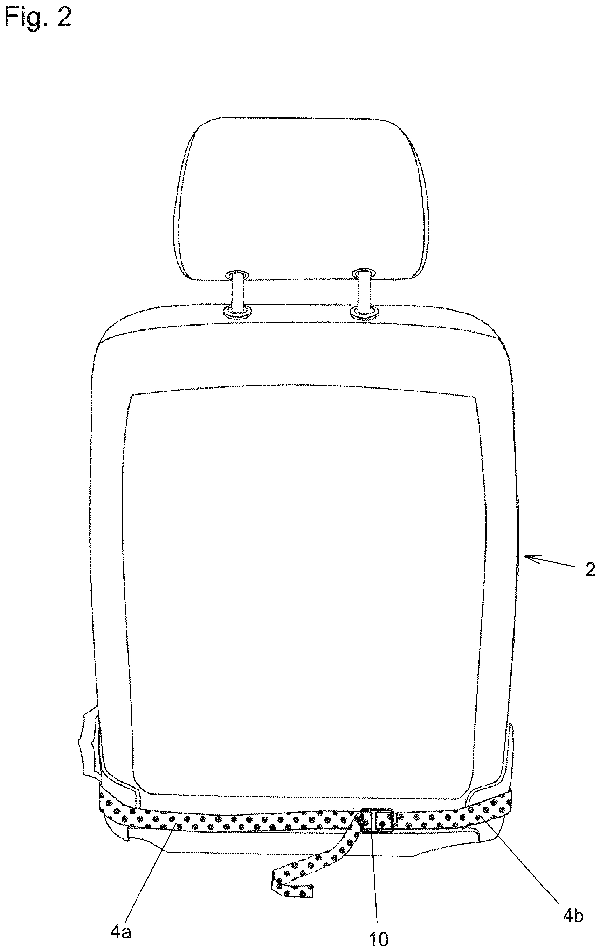

Auf der in Fig. 1 nicht sichtbaren, gegenüberliegenden Seite des Bezugsstoffs bzw. Kraffahrzeugsitzes geht ebenfalls ein Spannriemen 4b (vgl. Fig. 2) vom unteren Rand des Bezugsstoffs aus. Grundsätzlich könnte die Ausbildung des Schonbezuges auf dieser Seite gleich wie auf der in Fig. 1 sichtbaren Seite sein. Da auf dieser Seite des Sitzteils üblicherweise aber keine Funktionselemente angeordnet sind, könnte der auf dieser Seite liegende Seitenabschnitt des Bezugsstoffs 3 auch bis zum unteren Ende der Schmalseite des Sitzteils verlaufen und der Spannriemen 4b könnte vom hinteren Ende des Seitenabschnitts des Bezugsstoffs 3 ausgehen.

Zur Verbesserung der Halterung des Bezugsstoffs 3 in seinem hinteren Bereich ist am Bezugsstoff im Bereich des hinteren Endes des Seitenabschnitts 3c ein vom unteren Rand des Seitenabschnitts ausgehendes Rückspannband 9 angeordnet, welches schräg nach unten und hinten verläuft und im hintersten Bereich der seitlichen Schmalseite des Sitzteils oder an der Rückseite des Kraftfahrzeugsitzes mit dem Spannriemen 4a verbunden ist.

Im in Fig. 1 dargestellten Ausführungsbeispiel ist der Seitenabschnitt 3c im Bereich des hinteren Endes des Sitzflächenabschnitts 3a nur mehr sehr schmal ausgebildet. Der Seitenabschnitt 3c könnte demgegenüber auch etwas weiter nach unten reichen. Andererseits könnte der Seitenabschnitt 3c auch vor dem hinteren Ende des Sitzflächenabschnitts 3a enden. Das in Fig. 1 dargestellte hintere Verbindungsband 7 und das Rückspannband 9 könnten dann vom Rand des Sitzflächenabschnitts 3a ausgehen.

Die zur Rückseite des Kraftfahrzeugsitzes geführten Spannriemen 4a, 4b können miteinander verbunden werden, vgl. Fig. 2. In diesem Ausführungsbeispiel erfolgt die Verbindung über eine Schnalle 10.

Im Ausführungsbeispiel sind die Spannriemen 4a, 4b freie Abschnitte eines Bandes 4, welches im Bereich zwischen den die Spannriemen 4a, 4b bildenden Endabschnitten an den unteren Rand 3d des Bezugsstoffs 3 angenäht ist.

Der Bezugsstoff 3 kann günstigerweise noch einen an das hintere Ende des Sitzflächenabschnitts 3a anschließenden Einsteckabschnitt aufweisen, welcher in Fig. 1 nicht sichtbar ist und in den Spalt zwischen dem Sitzteil 1 und dem Rückenlehnenteil 2 eingesteckt ist, wie dies bekannt ist.

Wie zuvor beschrieben, liegt der Punkt, an welchem der Spannriemen 4a vom unteren Rand 3d des Bezugsstoffs 3 ausgeht, im Ausführungsbeispiel im Übergangsbereich zwischen dem Vorderabschnitt 3b und dem Seitenabschnitt 3c. Dieser Ausgangspunkt könnte in einer modifizierten Ausführungsform auch an einer Stelle im Bereich der vorderen Hälfte des Seitenabschnitts 3c liegen. Anschließend an den Ausgangspunkt würde der untere Rand 3d zur Rückseite des Kraftfahrzeugsitzes hin wieder nach oben verlaufen.

Zwischen dem Rand des Bezugsstoffs 3 und dem im Abstand hierzu verlaufenden Spannriemen 4a könnte beispielsweise auch nur ein Verbindungsband 6, 7 verlaufen oder mehr als zwei solche Verbindungsbänder könnten vorgesehen sein.

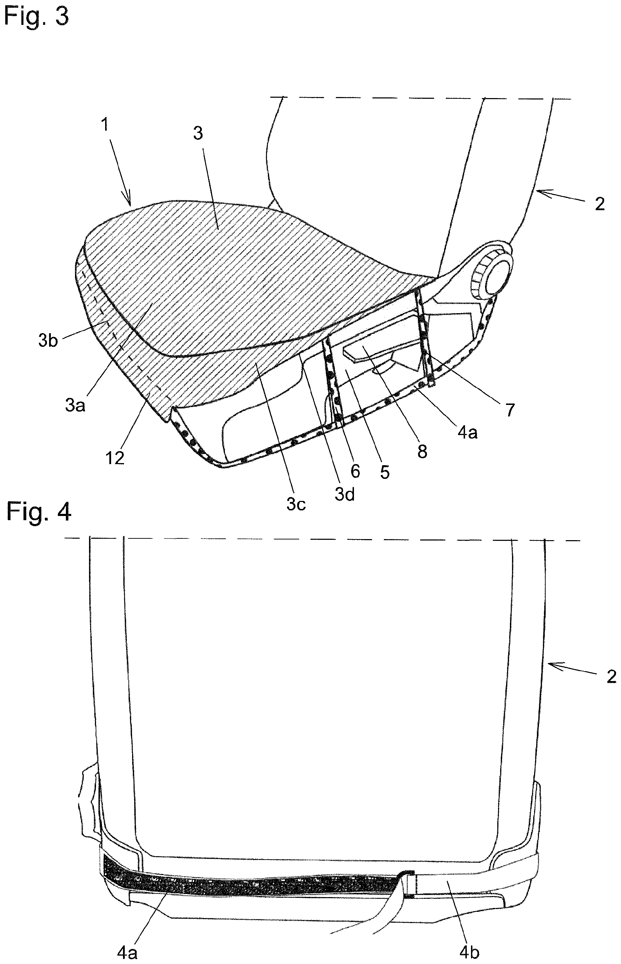

Ein zweites Ausführungsbeispiel der Erfindung ist in Fig. 3 dargestellt. Im Folgenden werden die Unterschiede gegenüber dem ersten Ausführungsbeispiel erläutert. Im Übrigen ist die Beschreibung zum ersten Ausführungsbeispiel entsprechend heranziehbar.

Im Unterschied zum ersten Ausführungsbeispiel ist hier am unteren Rand 3d des Bezugsstoffs 3 ein Tunnelbund 12 ausgebildet, durch welchen ein Band 4 verläuft. Die aus dem Tunnelbund 12 herausstehenden Abschnitte bilden in analoger Weise wie beim ersten Ausführungsbeispiel beschrieben die Spannriemen 4a, 4b. Der Ausgangspunkt des Spannriemens 4a vom unteren Rand des Bezugsstoffs 3 liegt entsprechend Fig. 5 im Übergangsbereich zwischen dem Vorderabschnitt 3b und dem Seitenabschnitt 3c, könnte aber wiederum ebenso in einer vorderen Hälfte des Seitenabschnitts 3c liegen.

Außerdem entfallen im in Fig. 3 gezeigten Ausführungsbeispiel die Schnallen 11 der Verbindungsbänder. Die Schlaufen der Verbindungsbänder 6, 7 sind durch eine Vernähung ausgebildet. Die Ausbildung könnte aber auch entsprechend dem ersten Ausführungsbeispiel sein.

Auch das Rückspannband ist weggelassen, könnte aber auch vorhanden sein.

Fig. 4 zeigt im weiteren eine mögliche Modifikation der gegenseitigen Verbindung der Spannriemen 4a, 4b mittels eines Klettverschlusses. Die Hakenteile und Vliesteile des Klettverschlusses sind hierbei an einem der Spannriemen 4a angebracht, welcher durch eine am anderen der Spannriemen 4b angebrachte Öse durchgeführt wird. Stattdessen könnte auch einer der Spannriemen 4a das Hakenteil und der andere der Spannriemen 4b das Vliesteil des Klettverschlusses aufweisen.

### Legende zu den Hinweisziffern:

- 1: Sitzteil
- 2: Rückenlehnenteil
- 3: Bezugsstoff
- 3a: Sitzflächenabschnitt
- 3b: Vorderabschnitt
- 3c: Seitenabschnitt
- 3d: unterer Rand
- 4: Band
- 4a: Spannriemen
- 4b: Spannriemen
- 5: Öffnung
- 6: Verbindungsband
- 7: Verbindungsband
- 8: Funktionselement
- 9: Rückspannband
- 10: Schnalle
- 11: Schnalle
- 12: Tunnelbund

## Patentansprüche

1. Schonbezug für ein Sitzteil (1) eines Kraftfahrzeugsitzes mit einem Bezugsstoff (3) zum Überdecken einer Sitzfläche des Sitzteils (1) und Spannriemen (4a, 4b) zum Befestigen des Schonbezuges am Kraftfahrzeugsitz, wobei der Schonbezug zumindest eine Öffnung (5) für an einer der seitlichen Schmalseiten des Sitzteils (1) angeordnete Funktionselemente (8) des Sitzteils (1) aufweist, welche zwischen einem Rand (3d) des Bezugsstoffs (3) und einem, vorzugsweise gummielastisch dehnbar ausgebildeten, Spannriemen (4a) liegt, welcher im Abstand unterhalb des Randes (3d) des Bezugsstoffs (3) zur Rückseite des Kraftfahrzeugsitzes verläuft, und wobei zwischen dem Rand des Bezugsstoffs (3) und dem Spannriemen (4a), welcher im Abstand unterhalb des Randes (3d) des Bezugsstoffs (3) verläuft, mindestens ein Verbindungsband (6, 7) verläuft, welches eine Schlaufe ausbildet, durch welche der Spannriemen (4a) verläuft, wobei die Schlaufe gegenüber dem Spannriemen (4a) in dessen Längsrichtung verschiebbar ist, **dadurch gekennzeichnet, dass** das mindestens eine Verbindungsband (6, 7) gummielastisch dehnbar ausgebildet ist.

2. Schonbezug nach Anspruch 1, **dadurch gekennzeichnet, dass** der Bezugsstoff (3) einen Sitzflächenabschnitt (3a) zur Auflage auf der Sitzfläche des Sitzteils (1), einen Vorderabschnitt (3b) zur Anlage an der vorderen Schmalseite des Sitzteils (1) und Seitenabschnitte (3c) zur Anlage an den seitlichen Schmalseiten des Sitzteils umfasst, wobei der Spannriemen (4a) im Abstand unterhalb des unteren Randes (3d) eines der Seitenabschnitte (3c) des Bezugsstoffs (3) zur Rückseite des Kraftfahrzeugsitzes verläuft.

3. Schonbezug nach Anspruch 1 oder 2, **dadurch gekennzeichnet, dass** der Spannriemen (4a) im Bereich eines unteren Randes (3d) des Bezugsstoffs (3) vom Bezugsstoff (3) ausgeht und auf der Rückseite des Kraftfahrzeugsitzes mit einem weiteren, auf der gegenüberliegenden Seite des Bezugsstoffs (3) im Bereich eines unteren Randes (3d) des Bezugsstoffs (3) vom Bezugsstoff (3) ausgehenden, zur Rückseite des Kraftfahrzeugsitzes verlaufenden, vorzugsweise gummielastisch dehnbar ausgebildeten, Spannriemen (4b) verbindbar ist.

4. Schonbezug nach einem der Ansprüche 1 bis 3, **dadurch gekennzeichnet, dass** der mindestens eine, im Abstand unterhalb des Randes (3d) des Bezugsstoffs (3) verlaufende Spannriemen (4a) im Bereich der vorderen Hälfte des Seitenabschnitts (3c) oder im Bereich des Übergangs zwischen dem Vorderabschnitt (3b) und dem Seitenabschnitt (3c) des Bezugsstoffs (3) vom unteren Rand (3d) des Bezugsstoffs (3) ausgeht.

5. Schonbezug nach einem der Ansprüche 1 bis 4, **dadurch gekennzeichnet, dass** die auf gegenüberliegenden Seiten des Bezugsstoffs (3) vom Bezugsstoff (3) ausgehenden, zur Rückseite des Kraftfahrzeugsitzes verlaufenden Spannriemen (4a, 4b) mittels eines Klettverschlusses oder mittels einer Schnalle (10) miteinander verbindbar sind.

6. Schonbezug nach einem der Ansprüche 1 bis 5, **dadurch gekennzeichnet, dass** die auf gegenüberliegenden Seiten des Bezugsstoffs (3) vom Bezugsstoff (3) ausgehenden, zur Rückseite des Kraftfahrzeugsitzes verlaufenden Spannriemen (4a, 4b) vom Bezugsstoff (3) abstehende Abschnitte eines im Bereich zwischen diesen Abschnitten an den unteren Rand (3d) des Bezugsstoffs (3) angenähten Bandes sind.

7. Schonbezug nach einem der Ansprüche 1 bis 5, **dadurch gekennzeichnet, dass** am unteren Rand (3d) des Bezugsstoffs (3) ein Tunnelbund (12) ausgebildet ist, durch welchen ein Band (4) verläuft, wobei die auf gegenüberliegenden Seiten des Bezugsstoffs (3) vom Bezugsstoff (3) ausgehenden, zur Rückseite des Kraftfahrzeugsitzes verlaufenden Spannriemen (4a, 4b) von aus dem Tunnelbund (12) herausragenden Abschnitten dieses Bandes (4) gebildet werden.

8. Schonbezug nach einem der Ansprüche 1 bis 7, **dadurch gekennzeichnet, dass** vom Rand des Bezugsstoffs (3), unterhalb von dem der Spannriemen (4a) verläuft, im Bereich des hinteren Endes der Sitzfläche des Sitzteils ein Rückspannband (9) ausgeht, welches schräg nach hinten und unten verläuft und mit dem Spannriemen (4a) verbunden ist.

## Claims

1. Protective cover for a seat part (1) of a motor vehicle seat, having a cover material (3) for covering a seating surface of the seat part (1) and tensioning belts (4a, 4b) for fastening the protective cover to the motor vehicle seat, the protective cover comprising at least one opening (5) for functional elements (8) of the seat part (1) that are arranged on one of the lateral narrow sides of the seat part (1), which opening lies between an edge (3d) of the cover material (3) and a preferably rubber-elastically stretchable tensioning belt (4a) that extends at a distance below the edge (3d) of the cover material (3) to the rear side of the motor vehicle seat, and at least one connecting strap (6, 7) extending between the edge of the cover material (3) and the tensioning belt (4a) that extends at a distance below the edge (3d)' of the cover material (3), which connecting strap forms a loop through which the tensioning belt (4a) extends, the loop being displaceable in relation to the tensioning belt (4a) in the longitudinal direction thereof, **characterised in that** the at least one connecting strap (6, 7) is rubber-elastically stretchable.

2. Protective cover according to claim 1, **characterised in that** the cover material (3) has a seating surface section (3a) for resting on the seating surface of the seat part (1), a front section (3b) for placing on the front narrow side of the seat part (1) and side sections (3c) for placing on the lateral narrow sides of the seat part, the tensioning belt (4a) extending at a distance below the lower edge (3d) of one of the side sections (3c) of the cover material (3) to the rear side of the motor vehicle seat.

3. Protective cover according to claim 1 or 2, **characterised in that** the tensioning belt (4a) starts from the cover material (3) in the region of a lower edge (3d) of the cover material (3) and can be connected on the rear side of the motor vehicle seat to a further tensioning belt (4b) starting from the cover material (3) on the opposite side of the cover material (3) in the region of a lower edge (3d) of the cover material (3) and extending to the rear side of the motor vehicle seat, which tensioning belt is preferably rubber-elastically stretchable.

4. Protective cover according to any of claims 1 to 3, **characterised in that** the at least one tensioning belt (4a) extending at a distance below the edge (3d) of the cover material (3) starts from the lower edge (3d) of the cover material (3) in the region of the front half of the side section (3c) or in the region of the transition between the front section (3b) and the side section (3c) of the cover material (3).

5. Protective cover according to any of claims 1 to 4, **characterised in that** the tensioning belts (4a, 4b) starting from the cover material (3) on opposite sides of the cover material (3) and extending to the rear side of the motor vehicle seat can be connected to one another by means of a hook-and-loop fastener or by means of a buckle (10).

6. Protective cover according to any of claims 1 to 5, **characterised in that** the tensioning belts (4a, 4b) starting from the cover material (3) on opposite sides of the cover material (3) and extending to the rear side of the motor vehicle seat are sections of a strap that project from the cover material (3), which strap is sewn onto the lower edge (3d) of the cover material (3) in the region between these sections.

7. Protective cover according to any of claims 1 to 5, **characterised in that** a casing (12) is formed at the lower edge (3d) of the cover material (3), through which a strap (4) extends, the tensioning belts (4a, 4b) starting from the cover material (3) on opposite sides of the cover material (3) and extending to the rear side of the motor vehicle seat being formed from sections of this strap (4) that protrude from the casing (12).

8. Protective cover according to any of claims 1 to 7, **characterised in that** a back-tensioning strap (9) starts from the edge of the cover material (3) below which the tensioning belt (4a) extends, in the region of the rear end of the seating surface of the seat part, which back-tensioning strap extends at an angle rearwards and downwards and is connected to the tensioning belt (4a).

## Revendications

1. Housse de protection pour une partie d'assise (1) d'un siège de véhicule automobile, avec un tissu de revêtement (3) pour recouvrir une surface d'assise de la partie d'assise (1) et des courroies de serrage (4a, 4b) pour fixer la housse de protection au siège de véhicule automobile, la housse de protection étant munie d'au moins une ouverture (5) pour des éléments fonctionnels (8) de la partie d'assise (1) disposés sur l'un des côtés étroits latéraux de la partie d'assise (1), laquelle ouverture est située entre un bord (3d) du tissu de revêtement (3) et une courroie de serrage (4a), de préférence conçue élastiquement extensible, et qui s'étend à distance en dessous du bord (3d) du tissu de revêtement (3) vers le dos du siège du véhicule automobile, et au moins une bande de liaison (6, 7) s'étendant entre le bord du tissu de revêtement (3) et la courroie de serrage (4a) qui s'étend à distance en dessous du bord (3d) du tissu de revêtement (3), laquelle bande de liaison forme une boucle à travers laquelle passe la courroie de serrage (4a), la boucle pouvant être déplacée par rapport à la courroie de serrage (4a) dans la direction longitudinale de cette dernière, **caractérisée en ce que** ladite au moins une bande de liaison (6, 7) est réalisée élastiquement extensible.

2. Housse de protection selon la revendication 1, **caractérisée en ce que** le tissu de revêtement (3) comprend une section de surface d'assise (3a) à poser sur la surface d'assise de la partie d'assise (1), une section avant (3b) à poser sur le côté étroit avant de la partie d'assise (1) et des sections latérales (3c) à poser sur les côtés étroits latéraux de la partie d'assise, la courroie de serrage (4a) s'étendant à distance en dessous du bord inférieur (3d) de l'une des sections latérales (3c) du tissu de revêtement (3) vers le dos du véhicule automobile.

3. Housse de protection selon la revendication 1 ou 2, **caractérisée en ce que** la courroie de serrage (4a) part du tissu de revêtement (3) dans la zone d'un bord inférieur (3d) du tissu de revêtement (3), et peut être reliée dans le dos du siège du véhicule automobile à une autre courroie de serrage (4a) qui part du côté opposé du tissu de revêtement (3) dans la zone d'un bord inférieur (3d) du tissu de revêtement (3), qui s'étend vers le dos du siège du véhicule automobile, et qui est de préférence conçue élastiquement extensible.

4. Housse de protection selon l'une des revendications 1 à 3, **caractérisée en ce que** ladite au moins une courroie de serrage (4a) s'étendant à distance en dessous du bord (3d) du tissu de revêtement (3) part du bord inférieur (3d) du tissu de revêtement (3) dans la zone de la moitié avant de la section latérale (3c) ou dans la zone de la transition entre la section avant (3b) et la section latérale (3c) du tissu de revêtement (3).

5. Housse de protection selon l'une des revendications 1 à 4, **caractérisée en ce que** les sangles de serrage (4a, 4b) partant du tissu de revêtement (3) depuis les côtés opposés du tissu de revêtement (3) et s'étendant vers le dos du siège du véhicule automobile peuvent être reliées ensemble au moyen d'une fermeture autoagrippante ou au moyen d'une boucle (10).

6. Housse de protection selon l'une des revendications 1 à 5, **caractérisée en ce que** les sangles de serrage (4a, 4b) partant du tissu de revêtement (3) depuis les côtés opposés du tissu de revêtement (3) et s'étendant vers le dos du siège du véhicule automobile sont des sections s'écartant du tissu de revêtement (3) d'une bande cousue sur le bord inférieur (3d) du tissu de revêtement (3) dans la zone située entre ces sections.

7. Housse de protection selon l'une des revendications 1 à 5, **caractérisée en ce qu'**une coulisse (12) est formée sur le bord inférieur (3d) du tissu de revêtement (3), à travers laquelle s'étend une bande (4), les sangles de serrage (4a, 4b) partant du tissu de revêtement (3) depuis des côtés opposés du tissu de revêtement (3) et s'étendant vers le dos du siège du véhicule automobile étant formées par des sections de cette bande (4) qui dépassent de la coulisse (12).

8. Housse de protection selon l'une des revendications 1 à 7, **caractérisée en ce qu'**une bande de serrage arrière (9) part, dans la zone de l'extrémité arrière de la surface d'assise de la partie d'assise, du bord du tissu de revêtement (3) en dessous duquel s'étend la courroie de serrage (4a), laquelle bande de serrage s'étend en biais vers l'arrière et vers le bas et est reliée à la courroie de serrage (4a).
